# DEMANDE DE BREVET EUROPEEN

(11) **EP 1 832 972 A2**
(43) Date de publication de la demande: **12.09.2007**
(21) Numéro de dépôt: 07103640.4
(22) Date de dépôt: 06.03.2007
(51) Int. Cl.: G06F 3/12

(54) **Procédé d'impression sur un périphérique choisi d'un réseau comportant un serveur, périphérique et serveur correspondants**

(30) Priorité: 07.03.2006 FR 0602004
(71) Demandeur: SAGEM Communication, 75015 Paris (FR)
(72) Inventeur: Mascre, Rémi, 95600, EAUBONNE (FR)
(74) Mandataire: Callon de Lamarck, Jean-Robert

(57) **Abrégé**

L'invention concerne un procédé d'impression d'un document à partir d'un terminal (T) pouvant être connecté à un réseau (1) comportant un serveur (S) et au moins un périphérique d'impression (P1), comportant une étape d'envoi d'un document à imprimer à partir du terminal (T) vers le serveur (S), caractérisé en ce qu'il comporte les étapes de :
- mise à jour d'une liste (L) de travaux d'impression possibles sur le réseau (1), la liste (L) de travaux étant gérée par le serveur (S) et regroupant l'ensemble des travaux d'impression à réaliser ;
- transmission de ladite liste (L) aux périphériques du réseau ;
- affichage au moins en partie de ladite liste par les périphériques du réseau ;
- sélection d'un travail d'impression dans la liste (L) affichée par un périphérique (P1) choisi ; et
- impression du document du travail d'impression sélectionné par le périphérique (P1) choisi.

Elle concerne également un périphérique et un serveur.

## Description

L'invention concerne un procédé d'impression d'un document à partir d'un terminal d'un réseau comportant un serveur et au moins un périphérique d'impression, comportant une étape d'envoi d'un document à imprimer à partir du terminal vers le serveur.

L'invention concerne également un périphérique et un serveur correspondants.

### ETAT DE L'ART

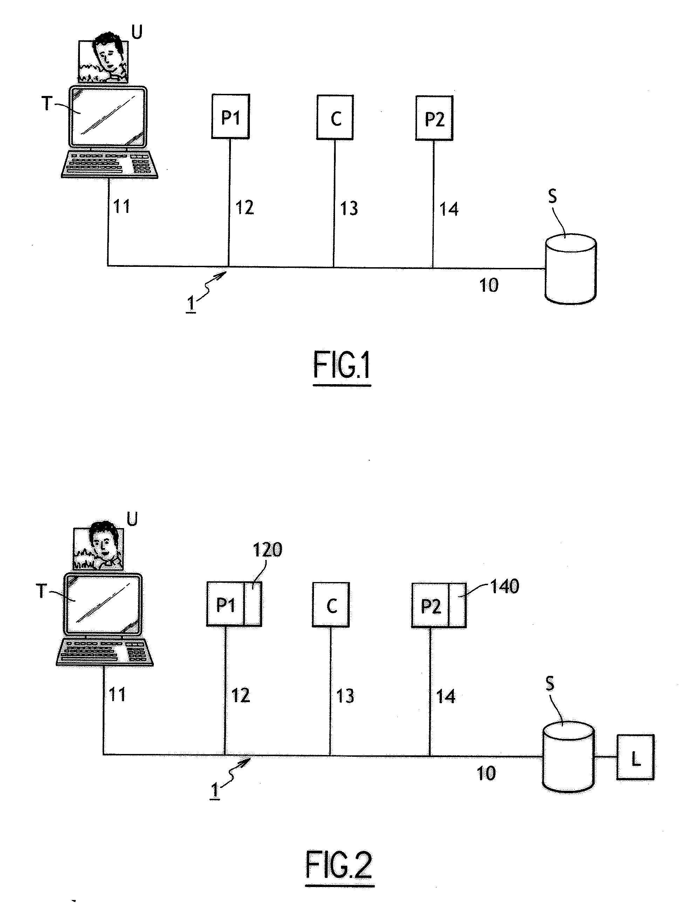

La figure 1 représente schématiquement un système connu comportant un réseau 1 et un terminal T d'un utilisateur U.

Le réseau 1 comporte un serveur S d'où part une connexion principale 10, un ordinateur C relié à la connexion 10 par une connexion 13, un périphérique P1 relié à la connexion 10 par une connexion 12 et un périphérique P2 relié à la connexion 10 par une connexion 14. On n'a représenté sur la figure 1 que deux périphériques P1 et P2 et un seul ordinateur C reliés au réseau 1, mais une pluralité de périphériques ou d'ordinateurs peut bien entendu être reliée au réseau 1.

Les périphériques P1 et P2 sont préférentiellement des périphériques permettant une impression d'un document sur un média.

Lorsque l'utilisateur U veut lancer une impression d'un document à partir de son terminal T sur le périphérique P1 parmi la pluralité de périphériques du réseau 1, il envoie au serveur S, grâce à son terminal T, une indication quant au terminal P1 choisi. L'indication est envoyée avec le document à imprimer au serveur S. Le serveur S stocke localement le document reçu à imprimer et le redirige vers le périphérique P1 pour son impression. Le serveur S stocke également une liste des travaux d'impression en cours. Les périphériques peuvent comporter une interface pour afficher une liste des travaux d'impression en cours sur chaque périphérique.

La technique précédente présente cependant des inconvénients.

Le choix du périphérique s'effectue avant l'envoi du document au serveur, ce qui implique la création d'un nouveau travail d'impression en cas de non disponibilité dudit périphérique (panne, absence de media, d'encre ou de toner...) ou si l'utilisateur change d'avis, après la création du travail d'impression, sur le périphérique à utiliser.

L'impression s'effectue dès la création du travail d'impression et dès la disponibilité du périphérique ou peut être différée.

### PRESENTATION DE L'INVENTION

L'invention propose de pallier au moins un des inconvénients précités.

A cet effet, on propose selon l'invention un procédé d'impression selon la revendication principale.

L'invention est avantageusement complétée par les caractéristiques des revendications secondaires.

L'invention concerne également un périphérique et un serveur permettant la mise en oeuvre d'un procédé selon l'invention.

L'invention comporte de nombreux avantages.

Le choix du périphérique s'effectue après l'envoi du document au serveur, ce qui évite la création d'un nouveau travail d'impression en cas de non disponibilité dudit périphérique (panne, absence de media, d'encre ou de toner...). L'utilisateur peut ainsi également changer d'avis, après la création du travail d'impression, quant au périphérique à utiliser.

L'utilisateur peut choisir facilement un périphérique parmi une pluralité de périphériques du réseau.

Il peut différer l'impression s'il le souhaite.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée représente un système connu comportant un réseau 1 et un terminal T d'un utilisateur U ; et
- la figure 2 représente un système selon l'invention comportant un réseau 1 et un terminal T d'un utilisateur U.

Dans toutes les figures, les éléments similaires portent des références numériques identiques.

### DESCRIPTION DETAILLEE

La figure 2 représente schématiquement un exemple d'un réseau 1 permettant la mise en oeuvre d'un procédé selon l'invention.

Le réseau 1 comporte un serveur S d'où part une connexion principale 10, et peut comporter un ordinateur C relié à la connexion 10 par une connexion 13, un périphérique P1 relié à la connexion 10 par une connexion 12 et un périphérique P2 relié à la connexion 10 par une connexion 14. On n'a représenté sur la figure 2 que deux périphériques P1 et P2 et un seul ordinateur C reliés au réseau 1, mais une pluralité de périphériques ou d'ordinateurs peut bien entendu être reliée au réseau 1.

Le réseau 1 peut être de tout type, par exemple du type intranet et/ou internet, etc.

Les périphériques P1 et P2 sont préférentiellement des périphériques permettant une impression d'un document sur un média. Les périphériques P1 et P2 sont par exemple des imprimantes ou des machines multifonctions comportant des moyens d'impression.

Le serveur S est apte à gérer l'impression de documents sur des périphériques du réseau.

Un terminal T peut se connecter au réseau 1. Un utilisateur U du terminal T lance une impression d'un document à partir de son terminal T en créant un travail d'impression et en envoyant au serveur S, grâce à son terminal T, le document à imprimer au serveur S. Le transfert du document à partir du terminal T vers le serveur S, ainsi que l'ensemble des transferts de documents utilisés dans un procédé selon l'invention, se fait selon les procédés classiques de transfert de fichiers, comme par exemple le protocole TCP/lP (Transmission Control Protocol/Internet Protocol).

Le serveur S stocke localement le document reçu à imprimer.

Le serveur S comporte également des moyens pour la création et la mise à jour d'une liste L de travaux d'impression possibles sur le réseau 1. La liste L regroupe l'ensemble des travaux d'impression à réaliser et qui ont été créés et envoyés au serveur S par les différents terminaux connectés à un moment ou à un autre au réseau 1.

Le serveur S comporte en outre des moyens pour la transmission de ladite liste L aux périphériques P1 et P2 du réseau 1.

Le périphérique P1 comporte des moyens 120 et le périphérique P2 comporte des moyens 140 pour la réception de la liste L de travaux d'impression possibles sur le réseau 1. Les moyens 120 et 140 sont également aptes à afficher au moins en partie ladite liste L. L'affichage se fait par un écran à cristaux liquides par exemple.

L'utilisateur U peut donc se déplacer physiquement dans la structure dans laquelle est installé le réseau (par exemple les bureaux d'une entreprise) et choisir un périphérique sur lequel il souhaite imprimer le document. A cet effet, l'utilisateur U sélectionne sur les moyens 120 du périphérique P1 choisi par lui un travail d'impression dans la liste L affichée. La sélection se fait par exemple grâce à un clavier ou un écran tactile - qui est avantageusement celui permettant l'affichage de la liste L sur le périphérique P1.

A partir de cette sélection, l'impression du document du travail d'impression sélectionné peut être effectuée sur le périphérique P1 choisi. Pour ce faire, le périphérique P1 demande le document à imprimer au serveur S. Le serveur S envoie le document vers le périphérique P1 choisi pour son impression.

Une fois l'impression effectuée, le périphérique P1 choisi indique au serveur S que l'impression a été effectuée.

Le serveur S peut alors mettre à jour la liste L de travaux d'impression possibles sur le réseau 1 après l'impression du document en supprimant le travail d'impression effectué. Le serveur transmet ladite liste L mise à jour aux périphériques P1 et P2 du réseau.

Les périphériques P1 et P2 affichent au moins en partie ladite liste mise à jour.

Avantageusement, un procédé selon l'invention comporte une étape de mise en place, lors de l'envoi du document à partir du terminal T vers le serveur S, d'une identification d'un utilisateur pour permettre l'impression. Cette identification peut comprendre par exemple un nom d'ouverture de session (ou « login » selon la terminologie anglo-saxonne généralement utilisée par l'homme du métier) et/ou un mot de passe au choix de l'utilisateur. L'impression du document envoyé par le terminal T ne pourra être effectuée que si la personne sélectionnant le travail d'impression correspondant connaît le nom d'ouverture de session et/ou le mot de passe. Ainsi, lors de l'affichage au moins en partie de la liste par le périphérique P1 choisi et/ou de la sélection du document sur le périphérique P1 choisi, les moyens 120 peuvent demander la saisie du nom d'ouverture de session et/ou du mot de passe. La saisie s'effectue classiquement grâce à un clavier par exemple.

Avantageusement, l'étape d'affichage au moins en partie de ladite liste par le périphérique P1 choisi permet l'affichage uniquement des travaux d'impression correspondant à l'utilisateur identifié. Un utilisateur U identifié ne verra ainsi sur les moyens 120 que les travaux d'impression qu'il a créés sur son terminal T.

Un procédé selon l'invention comporte avantageusement une étape de mise en place d'un pilote générique en partage sur le serveur S, le pilote générique regroupant les caractéristiques d'impression communes des périphériques du réseau 1, et permettant ainsi l'impression du document sélectionné sur l'ensemble des périphériques. Les caractéristiques regroupent par exemple la résolution, le nombre de pages par feuilles, etc.

## Revendications

1. Procédé d'impression d'un document à partir d'un terminal (T) pouvant être connecté à un réseau (1) comportant un serveur (S) et au moins un périphérique d'impression (P1), comportant les étapes de :
- envoi d'un document à imprimer à partir du terminal (T) vers le serveur (S) ;
- mise à jour d'une liste (L) de travaux d'impression possibles sur le réseau (1), la liste (L) de travaux étant gérée par le serveur (S) et regroupant l'ensemble des travaux d'impression à réaliser ;
- transmission de ladite liste (L) aux périphériques du réseau ;
- affichage au moins en partie de ladite liste par les périphériques du réseau ;
- sélection d'un travail d'impression dans la liste (L) affichée par un périphérique (P1) choisi ; et
- impression du document du travail d'impression sélectionné par le périphérique (P1) choisi ;
**caractérisé en ce qu'**il comporte en outre une étape de mise en place d'un pilote générique en partage sur le serveur (S), le pilote générique regroupant les caractéristiques d'impression communes des périphériques du réseau (1), et permettant ainsi l'impression du document sur l'ensemble des périphériques.

2. Procédé selon la revendication 1, dans lequel l'étape d'impression comporte les étapes de :
- demande au serveur (S), par le périphérique (P1) choisi, dudit document sélectionné ; et
- envoi dudit document sélectionné à partir du serveur (S) vers le périphérique (P1) choisi pour son impression.

3. Procédé selon la revendication 2, comportant en outre une étape d'indication au serveur (S), de la part du périphérique (P1) choisi, de l'impression du document du travail d'impression sélectionné une fois l'impression effectuée.

4. Procédé selon l'une des revendications 1 à 3, comportant en outre des étapes de :
- mise à jour par le serveur (S) de la liste (L) de travaux d'impression possibles sur le réseau (1) après l'impression du document ;
- transmission de ladite liste (L) aux périphériques du réseau ; et
- affichage au moins en partie de ladite liste par les périphériques (P1) du réseau.

5. Procédé selon l'une des revendications 1 à 4, comportant une étape de mise en place, lors de l'envoi du document à partir du terminal (T) vers le serveur (S) et/ou de l'affichage au moins en partie de la liste par le périphérique (P1) choisi et/ou de la sélection du travail d'impression sur le périphérique (P1) choisi, d'une identification d'un utilisateur pour permettre l'impression.

6. Procédé selon la revendication 5, dans lequel l'étape d'affichage au moins en partie de ladite liste par le périphérique (P1) choisi permet l'affichage uniquement des travaux d'impression correspondant à l'utilisateur identifié.

7. Périphérique (P1) d'impression apte à être connecté à un réseau (1) comportant un serveur (S) et un terminal (T), comportant des moyens (120) pour:
- la réception d'une liste (L) de travaux d'impression possibles sur le réseau (1), la liste (L) de travaux étant gérée par le serveur (S) et regroupant l'ensemble des travaux d'impression à réaliser ;
- l'affichage au moins en partie de ladite liste ;
- la sélection d'un travail d'impression dans la liste (L) affichée; et
- l'impression du document du travail d'impression sélectionné ;
**caractérisé en ce qu'**il comporte en outre des moyens pour la mise en place locale d'un pilote générique en partage sur le serveur (S), le pilote générique regroupant les caractéristiques d'impression communes des périphériques du réseau (1), et permettant ainsi l'impression du document.

8. Périphérique selon la revendication 7, comportant des moyens pour demander au serveur (S) le document du travail d'impression sélectionné.

9. Périphérique selon la revendication 8, comportant en outre des moyens pour indiquer au serveur (S) l'impression du document une fois l'impression effectuée.

10. Périphérique selon l'une des revendications 7 à 9, comportant des moyens de mise en place, lors de l'affichage au moins en partie de la liste et/ou de la sélection du travail, d'une identification d'un utilisateur pour permettre l'impression.

11. Périphérique selon la revendication 10, dans lequel les moyens d'affichage au moins en partie de ladite liste permettent l'affichage uniquement des travaux d'impression correspondant à l'utilisateur identifié.

12. Serveur (S) d'un réseau pouvant comporter un terminal (T) et au moins un périphérique d'impression (P1), comportant des moyens pour :
- la réception d'un document à imprimer à partir du terminal (T) ;
- la mise à jour d'une liste (L) de travaux d'impression possibles sur le réseau (1), la liste (L) regroupant l'ensemble des travaux d'impression à réaliser ; et
- la transmission de ladite liste (L) aux périphériques du réseau;
**caractérisé en ce qu'**il comporte des moyens pour la mise en place d'un pilote générique en partage, le pilote générique regroupant les caractéristiques d'impression communes des périphériques du réseau (1), et permettant ainsi l'impression du document sur l'ensemble des périphériques

13. Serveur selon la revendication 12, comportant des moyens pour envoyer le document sélectionné à partir du serveur (S) vers le périphérique (P1) choisi pour son impression.

14. Serveur selon l'une des revendications 12 ou 13, comportant en outre des moyens pour :
- la mise à jour de la liste (L) de travaux d'impression possibles sur le réseau (1) après l'impression du document ; et
- la transmission de ladite liste (L) aux périphériques du réseau.
